Europäisches Patentamt

European Patent Office

Office européen des brevets

(11) Publication number: **0 407 455 B1**

# EUROPEAN PATENT SPECIFICATION

(45) Date of publication of patent specification: **04.08.93**

(51) Int. Cl.5: **C09K 17/00**, E02D 3/12, A62D 3/00, C01F 11/46

(21) Application number: **89904620.5**

(22) Date of filing: **29.03.89**

(86) International application number:
**PCT/NL89/00014**

(87) International publication number:
**WO 89/09251 (05.10.89 89/24)**

(54) **PROCEDURE FOR LOCALLY RAISING THE GROUND ARTIFICIALLY.**

(30) Priority: **31.03.88 NL 8800838**

(43) Date of publication of application:
**16.01.91 Bulletin 91/03**

(45) Publication of the grant of the patent:
**04.08.93 Bulletin 93/31**

(84) Designated Contracting States:
**BE DE FR GB IT NL**

(56) References cited:
**FR-A- 2 396 837**
**US-A- 3 876 439**
**US-A- 4 465 518**

**Patent Abstracts of Japan, vol. 10, no. 43 (C-329) (2100), 20. Febr. 1986; & JP-A-60 190 490**

(73) Proprietor: **GRONDMECHANICA DELFT**
**Stieltjesweg 2**
**NL-2628 CK Delft(NL)**

(72) Inventor: **SCHUILING, Roelof, Dirk**
**Noord Houdringelaan 5**
**NL-3722 BP Bilthoven(NL)**

(74) Representative: **de Bruijn, Leendert C. et al**
**Nederlandsch Octrooibureau Schevening-**
**seweg 82 P.O. Box 29720**
**NL-2502 LS Den Haag (NL)**

EP 0 407 455 B1

## Description

The present invention relates to a procedure for locally raising the ground artifically.

It is generally known that the ground is in motion in many places. This movement may constitute not only a subsidence of the ground but also a rising of the ground. Generally these are very slow movements of a few millimetres or centimetres per century. Such movements are termed epirogenic movements. Subsidence of the ground gives rise to the appearance of basins to which the sea generally has access and in which sedimentation of sand, clay or lime takes place.

Even since the end of the Palaeozoic Holland has been part of a subsidence region because there is a thick stratum of sediment dating from the carboniferous, Permian, Mesozoic and Caenozoic era.

The relative subsidence of the land with respect to the sea level during the Holocene, that is to say, during the last thousand years, is clear from the geological structure of the west and north of Holland and the extreme west of Belgium. The Holocene subsidences are described by the Rijks Geologische Dienst (State Geological Service) in part as the Westland formation. The relative subsidence of this region is due to

a) a rise in the sea level owing to the melting of land ice as a consequence of the increasing $CO_2$ content of the atmosphere (greenhouse effect),

b) subsidence of the land.
The subsidence is subdivided into
b1 the isostatic subsidence as a consequence of the rise of Scandinavia,
b2 the settling of loose sediments.

In Holland, the estimates of the order of magnitude of the present relative ground subsidence vary from 0 to 40 cm per century. For hydraulogical works, an allowance is made for a subsidence of 20 cm per century. Of these 20 cm, the largest portion is accounted for by the rise in sea level.

It is hardly necessary to explain that, in low-lying countries such as Holland, the subsidence of the ground will present, in the relatively short term, a considerable problem to which solutions are urgently required.

It is known that there is a porous limestone stratum many hundreds of metres thick, the so-called chalk formation originating from the Upper Cretaceous, at a depth in the order of 500-1000 metres under large parts of Holland. This formation comes to the surface in Limburg.

Proposals have already been made to raise the ground locally by using hydraulic pressures (in this case, injection of large quantities of water into the ground).

It was found that the ground can artificially be raised more advantageously by converting an equivalent quantity of calcite ($CaCO_3$) present in the porous underground limestone formations into gypsum ($CaSO_4$) by means of injecting a quantity of sulphuric acid.

The calcite then reacts with the sulphuric acid to form gypsum according to the reaction:

$$CaCO_3 + 2H^+ + SO_4^{2-} + H_2O \rightarrow CaSO_4 \cdot 2H_2O + CO_2.$$

This reaction is thermally inert, i.e. the heat of reaction is virtually equal to 0.

The Gibbs energy of the reaction is such that equilibrium lies considerably to the right, and this means that the reaction will proceed spontaneously even for low sulphate concentrations in weak acids and even against high $CO_2$ tensions.

The ground rises due to the fact that the molar volume of gypsum is 74.7 $cm^3$, and this is more than twice the molar volume of calcite (36.9 cm3). A volume change of 100% therefore takes place during the conversion.

These molar volumes were, of course, known, but until now no one has proposed to make use of the reaction described and the molar increase in volume which takes place during it to raise the ground when the ground contains limestone.

The abovementioned reaction offers the possibility of artificially raising certain parts of the land or of the sea bed in front of the coast.

From the above explanation it will be clear that such an artificial raising of the ground may be of importance for coastal defence in view of the rise in sea level to be expected.

In particular, Ameland, which threatens to become submerged within a time span of a century owing to the rise in sea level is of concern in this connection.

Several factors which oppose each other play a part in the propagation of acid in the calcite formation. On the one hand, the pore volume of the formation will be sealed by crystallization as a result of the formation of gypsum. On the other hand, the $CO_2$ formed keeps the pores open and this may even give rise to cracks in the rock, but there is no reason to suppose that the $CO_2$ will diffuse through the approximately 500 m thick covering layer if reference is made to the analogy of natural gas which has equally not diffused away.

This method of "geochemical engineering" may, of course, be carried out with pure $H_2SO_4$, but for economic reasons, waste sulphuric acid will, in practice, have to be used.

Waste sulphuric acid is amply available. Until now some of it has been transported to the North Sea and dumped there. If a few million tonnes of waste sulphuric acid out of the quantity which annually becomes available in the countries surrounding the North Sea could be used annually for the abovementioned application, the sulphuric acid injection described would make a marked contribution to coastal defence while, at the same time, the environmental problem of the contaminated sulphuric acid would be solved in an environmentally responsible manner, the heavy metals contained therein being deposited in the limestone formation.

Preference is given to 50 per cent $H_2SO_4$ because in that case it is exactly $CaSO_4.2H_2O$ which is produced. If more dilute $H_2SO_4$ is used, more has to be injected to obtain the same increase in volume.

The most important producers of waste sulphuric acid are the plants which produce titanium white.

It might be wondered whether the gypsum formed will subside with the elapse of time, but there need be no fear of this. In Germany, several towns have been built for centuries on such a natural alabaster cap.

Example

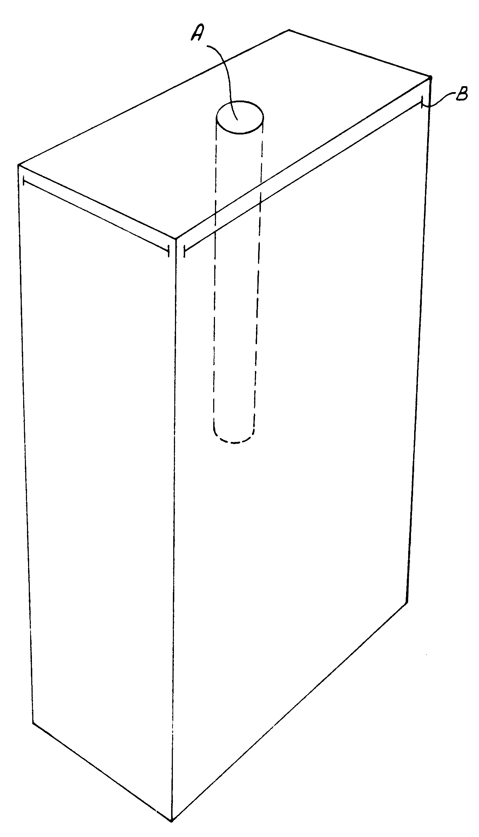

A cylindrical hole A having a diameter of 2.5 cm was drilled centrally in the longitudinal direction to a depth of 19.7 cm (= virtually half way) in a block of limestone from the chalk formation measuring 40.5 x 13.4 x 20.7 cm, as shown in the figure. The rock is composed exclusively of calcite (= $CaCO_3$) and has a pore volume of rather more than 20%.

23% strength by weight $H_2SO_4$ was poured into this hole in the course of 2 weeks; TIOFINE waste acid was used as acid. This acid was always poured up to 2 cm below the rim of the drilled hole, after which the hole was sealed by means of a rubber stopper. The level of the acid in the hole was regularly checked and topped up if necessary.

In order to be able to measure any changes in volume, markings B were made on the block and the distance between the said markings was measured before the start of the experiment.

170 $cm^3$ of waste acid was first added to the drilled hole; this was regularly topped up in the subsequent 14 days until a total of 3110 $cm^3$ of waste acid had been added. Two cracks were visible after 4 days, these ran vertically across the block and were diametrically opposite to each other, having their origin at the drilled hole. After a week, the number of cracks had increased to 4 and these made angles of approximately 90° with each other at the drilled hole. A horizontal crack running approximately at the level of the bottom of the drilled hole had also appeared. A system of concentric cracks formed around the drilled hole.

The test had to be discontinued after 14 days because sulphuric acid which had been added began to flow out through the cracks. The cracks were concentrated in the uppermost half of the block at the level of the bottom of the drilled hole; the lime which had reacted in contact with sulphuric acid had undergone a structural change; the rock does not disintegrate so rapidly into grains. A radiograph of this material revealed that it was composed exclusively of gypsum ($CaSO_4.2H_2O$).

To summarize, it appears that the starting material is composed of $CaCO_3$ having a fairly large pore volume, while the product after adding sulphuric acid is composed exclusively of $CaSO_4.2H_2O$.

On the basis of the reaction

$$CaCO_3 + H_2SO_4 + H_2O \rightarrow CaSO_4.2H_2O + CO_2,$$

it is possible to calculate how large the increase in volume should be after adding 3110 $cm^3$ of 23% strength by weight of sulphuric acid; this increase in volume turns out to be 320 $cm^3$. The change in the distance between the markings before and after the experiment reveals an increase in volume of 203 $cm^3$. To this must be added an increase in volume of the top surface (which bulged upwards) of the block of limestone amounting to a few tens of $cm^3$. Allowing for the fact that the pore volume of the starting material is significantly higher than that of the gypsum formed, it may be stated that the increase in volume of the limestone as a result of reaction with sulphuric acid has indeed resulted in a doubling of the volume of the solid rock.

**Claims**

1.  Procedure for locally raising the ground artificially, characterized in that an equivalent quantity of the calcite ($CaCO_3$) present in the porous underground limestone formations is converted into gypsum ($CaSO_4.2H_2O$) by injecting a quantity of sulphuric acid.

2.  Procedure according to Claim 1, characterized in that waste sulphuric acid is used.

3.  Procedure according to Claim 1 or 2, characterized in that 20 to 25% strength by weight sulphuric acid is used.

**Patentansprüche**

1.  Verfahren zum künstlichen örtlichen Anheben des Erdbodens, dadurch gekennzeichnet, daß eine äquivalente Menge Calcit ($CaCO_3$), der in den porösen Kalkstein-Formationen des Untergrunds vorhanden ist, durch Injektion einer Menge Schwefelsäure in Gips ($CaSO_4.2H_2O$)

überführt wird.

2. Verfahren nach Anspruch 1, dadurch gekennzeichnet, daß Abfall-Schwefelsäure verwendet wird.

3. Verfahren nach Anspruch 1 oder 2, dadurch gekennzeichnet, daß 20 bis 25%ige (Gewichtsprozent) Schwefelsäure verwendet wird.

**Revendications**

1. Procédé pour soulever localement et artificiellement le sol, caractérisé en ce qu'une quantité équivalente de calcite ($CaCO_3$) présente dans les formations calcaires, souterraines, poreuses, est convertie en gypse ($CaSO_4 . 2H_2O$) par injection d'une certaine quantité d'acide sulfurique.

2. Procédé selon la revendication 1, caractérisé en ce que l'on utilise de l'acide sulfurique mis au rebut.

3. Procédé selon la revendication 1 ou 2, caractérisé en ce que l'on utilise de l'acide sulfurique ayant une concentration de 20 à 25 % en poids.